# EUROPÄISCHE PATENTANMELDUNG

(11) **EP 2 177 282 A1**
(43) Veröffentlichungstag der Anmeldung: **21.04.2010**
(21) Anmeldenummer: 09013110.3
(22) Anmeldetag: 16.10.2009
(51) Int. Cl.: B21C 37/15, B21D 5/10, F16L 9/17

(54) **Belastungsangepasstes Strukturteil aus Metall für einen Wärmetauscher, Verfahren zur Herstellung eines belastungsangepassten Strukturteils**

(30) Priorität: 16.10.2008 DE 102008051894
(71) Anmelder: Behr GmbH & Co. KG, 70469 Stuttgart (DE)
(72) Erfinder: Heeb, Wolfgang, 82272 Moorenweis (DE); Türpe, Matthias, 71672 Marbach a. N. (DE)
(74) Vertreter: Grauel, Andreas

(57) **Zusammenfassung**

Die Erfindung betrifft ein belastungsangepasstes Strukturteil (2) aus Metall, insbesondere Aluminium, für einen Wärmetauscher, das an einem quer zu einer Längsachse liegenden Querschnitt wenigstens einen, eine Außenkontur beschreibenden Querschnittsradius aufweist, wobei das Strukturteil (2) am Querschnittsradius eine größte Wandstärke (d₁,D) aufweist, welche größer als eine Wandstärke (d₂,d) des Strukturteils (2) an einem übrigen Querschnittsbereich ist, und wobei erfindungsgemäß das Strukturteil (2) aus einem Halbzeug in Form eines gewalzten belastungsgerecht ausgelegten Metallbandes (1,5) mit, insbesondere stetig, variierender Dicke (d₁,d₂, d,D) (Rolled Tailored Blank) hergestellt ist, dessen größte Dicke (d₁,D) im Wesentlichen der größte Wandstärke (d₁,D) am Querschnittsradius des Strukturteils (2) entspricht und das eine übrige Dicke (d,d₂) aufweist, welche im Wesentlichen einer Wandstärke (d,d₂) des Strukturteils (2) an einem übrigen Querschnittsbereich entspricht. Die Erfindung betrifft auch ein Verfahren zur Herstellung eines solchen Strukturteils.

## Beschreibung

Die Erfindung betrifft ein belastungsangepasstes Strukturteil aus Metall für einen Wärmetauscher, das an einem quer zu einer Längsachse liegenden Querschnitt wenigstens einen, eine Außenkontur beschreibenden Querschnittsradius aufweist, wobei das Strukturteil am Querschnittsradius eine größte Wandstärke aufweist, welche größer als eine Wandstärke des Strukturteils an einem übrigen Querschnittsbereich ist. Die Erfindung betrifft weiter ein Verfahren zur Herstellung eines belastungsangepassten Strukturteils. Weiter betrifft die Erfindung einen Wärmetauscher.

Unter einem Strukturteil der eingangs genannten Art ist insbesondere ein Flachrohr zu verstehen. Ein anderes geeignetes Strukturteil der eingangs genannten Art kann in Form eines bei einem Wärmetauscher üblicherweise vorhandenen Rohrbodens gebildet sein. Grundsätzlich kann darüber hinaus auch ein anderes Strukturteil eines Wärmetauschers gemäß der eingangs genannten Art ausgebildet sein.

Ein Wärmetauscher weist üblicherweise einen Wärmetauscherblock auf, welcher aus einer Anzahl von Rohren gebildet sein kann, die zur Zuführung eines ersten Fluids von einem Rohrboden gehalten mit einer Fluidzuführung, beispielsweise einem Diffusor od.dgl., verbunden sind. Die Rohre werden üblicherweise von einem zweiten Fluid umströmt, welches separat vom ersten Fluid geführt ist, so dass im Wärmetauscherblock ein Wärmetausch zwischen dem ersten und zweiten Fluid stattfinden kann.

Beispielsweise ist aus WO 2006/045415 A1 ein Mehrkammer-Flachrohr bekannt, welches jedoch im Unterschied zu einem Strukturteil der eingangs genannten Art im Bereich eines Querschnittsradius seine geringste Wandstärke aufweist. Es hat sich gezeigt, dass gerade diese Art von Querschnittsradien, beispielsweise solche an Schmalseiten von Flachrohren, besonders hohen Belastungen ausgesetzt sind. Dies ist der Fall zum einen bei typischen dynamischen Wechselbelastungen, wie sie durch wechselnde Innendrücke od.dgl. hervorgerufen werden. Zum anderen ist dies der Fall auch bei vergleichsweise statischen Belastungen, wie sie im Betrieb stattfinden. So sind regelmäßig die Querschnittsradien bei Flachrohren - also deren Schmalseiten - beim Betrieb eines Wärmetauschers in einem Automobil in Fahrtrichtung ausgerichtet und unterliegen somit einer erhöhten Verschmutzung und Belastung wie beispielsweise durch Steinschlag, Staub od.dgl. Es kann auch erforderlich sein, dass beim Herstellungsprozess von Strukturteilen wie Rohren oder Rohrböden, besondere Belastungen wie sie durch einen Schweißvorgang entstehen, Rechnung zu tragen ist.

Bei Wärmetauschern mit Rohren oder anderen Strukturteilen aus Metallbändem - insbesondere Aluminiumbändern - ist es bisher nur vergleichsweise aufwändig möglich, solche und andere exponiert belastete Bereiche durch eine angepasste Bauteildicke derart auszulegen, dass die Strukturteile - insbesondere ein Rohr oder Flachrohr oder ein Rohrboden - den jeweiligen Belastungen standhalten. Eine gängige Lösung besteht regelmäßig darin, dass bei einem aus einem Metallband gefertigten Strukturteil die Wandstärke des gesamten Strukturteils von oft kleinen, jedoch stark beanspruchten Bereichen des Strukturteils vorgegeben wird. Die Folge davon ist oft ein Strukturteil mit unverhältnismäßig großen Wanddicken, was eine Einschränkung hinsichtlich Gewichts- und Materialersparnis am Wärmetauscher bedeutet. Um den derzeitigen Anforderungen von höheren Belastungen bei gleichzeitig geringerem Gewicht eines Wärmetauschers gerecht zu werden, ist es erforderlich, Strukturteile belastungsangepasst auszulegen. Es ist beispielsweise aus EP 1 635 964 B1. EP 0 845 646 B1 oder EP 0 781 610 B1 bekannt, ein Mehrkammer-Flachrohr mit Mehrfachumbiegungen oder Falzen herzustellen, so dass Innenstege und Randstege entstehen. Dabei ist ein Randsteg vorgesehen, um die Schmalseite des Mehrkammer-Flachrohres zu bilden. Aus DE 11 2005 000 422 T5, DE 11 2005 001 950 T5 oder US 5,931,226 sind auch Mehrkammerflachrohre bekannt, bei denen eine Schmalseite durch überlappende Bandbereiche gebildet ist oder durch Falzen oder Mehrfachumbiegungen gebildete Innenstege im Bereich der Schmalseite, d.h. in einem Querschnittsradius angeordnet sind. Zwar führt dies zu einer vergleichsweise dick ausgebildeten Wandstärke in einem Querschnittsradius des Flachrohres, wobei jedoch die ursprüngliche Wandstärke des zum Einsatz kommenden Metallbandes im Wesentlichen unverändert bleibt. Mit anderen Worten, sind solche Lösungen vergleichsweise kompliziert im Herstellungsvorgang und erlauben darüber hinaus nur eine Anpassung der Wandstärke im Rahmen einer Verdopplung, Verdreifachung oder einer anderen Vervielfachung der unverändert bleibenden Wandstärke des Metallbandes durch Mehrfachumbiegungen oder Falzen. Über derartige Lösungen lässt sich keine graduelle Anpassung der Wandstärke in einem Querschnittsradius erreichen.

Aus DE 199 26 228 B4 oder DE 196 06 981 A1 ist es grundsätzlich bekannt, im Rahmen eines Walzvorgangs Bleche mit einem ungleichförmigen Dickenprofil zu versehen. So betrifft DE 199 26 228 B4 ein Verfahren zur Herstellung maßgeschneiderter Bleche aus einem Aluminiumwerkstoff für belastungsgerecht ausgelegte Tiefziehteile. DE 196 06 981 A1 betrifft ein Verfahren zur Herstellung von Leichtbaublechen aus mindestens einem ersten metallischen Gurt und einem zweiten metallischen Gegengurt, wobei sich wiederholende Erhebungen durch einen Walzvorgang auf einem Gurt und/oder Gegengurt erzeugt sind.

DE 102 10 156 A1 beschreibt ein Herstellungsverfahren für ein Rohr, das aus einem Blech mit ungleichförmigem Dickenprofil hergestellt ist. Derartige Bleche sind unter dem Begriff "Taylored Blanks" bzw. "Taylored Rolled Blanks" bekannt. Das unterschiedliche Dickenprofil von Taylored Rolled Blanks" wird bei der Blechherstellung durch Variieren der Walzenabstände erzeugt. Gemäß DE 102 10 156 A1 wird ein solcher Blechrohling mit "variierendem" Dickenprofil zu einem Rohr umgeformt und anschließend, entlang einer Längsnaht, verschweißt - dabei entsteht ein Rohr, das jedoch in einem zur Längsachse liegenden Querschnitt immer eine konstante Wandstärke aufweist. Ein solches Rohr eignet sich nicht für einen Wärmetauscher.

Wünschenswert wäre eine Belastungsanpassung, welche den Erfordernissen eines Wärmetauschers Rechnung trägt und dennoch einfach realisierbar ist.

An dieser Stelle setzt die Erfindung an, deren Aufgabe es ist, ein belastungsangepasstes Strukturteil aus Metall für einen Wärmetauscher gemäß der eingangs genannten Art und ein Verfahren sowie einen Wärmetauscher der eingangs genannten Art anzugeben, bei dem die Belastungsanpassung vergleichsweise einfach und dennoch wirkungsvoll realisiert ist.

Betreffend das Strukturteil wird die Aufgabe durch die Erfindung mittels eines belastungsangepassten Strukturteils aus Metall für einen Wärmetauscher gemäß der eingangs genannten Art gelöst, bei dem erfindungsgemäß das Strukturteil aus einem Halbzeug in Form eines gewalzten belastungsgerecht ausgelegten Metallbandes mit variierender Dicke (so genanntes Rolled Taylored Blank) hergestellt ist, wobei dessen größte Dicke im Wesentlichen der größten Wandstärke im Querschnittsradius des Strukturteils entspricht und das eine übrige Dicke aufweist, welche im Wesentlichen einer Wandstärke des Strukturteils an einem übrigen Querschnittsbereich entspricht.

Die Erfindung geht von der Überlegung aus, dass die Anordnung einer größten Wandstärke an einem Querschnittsradius bei einem Strukturteil aus Metall für einen Wärmetauscher zu einer geeigneten Belastungsanpassung des Strukturteils führt. Darüber hinaus hat die Erfindung erkannt, dass die Realisierung einer solchen Belastungsanpassung gemäß dem Konzept der Erfindung dadurch zu erfolgen hat, dass das Strukturteil aus einem Halbzeug in Form eines gewalzten belastungsgerecht ausgelegten Metallbandes mit variierender Dicke (so genanntes Rolled Taylored Blank) hergestellt ist. Die Erfindung hat erkannt, dass sich dadurch umständliche Herstellungsvorgänge mit Mehrfachumbiegungen oder Falzen zur Bildung von Seiten oder Innenstegen vermeiden lassen und darüber hinaus eine Wandstärke am Querschnittsradius besonders vorteilhaft hinsichtlich einer Belastung angepasst werden kann. Dazu sieht das Konzept der Erfindung weiter vor, dass die größte Dicke des Halbzeugs in Form des gewalzten belastungsgerecht ausgelegten Metallbandes im Wesentlichen der größten Wandstärke am Querschnittsradius des Strukturteils entspricht und eine übrige Dicke des Halbzeugs in Form des gewalzten belastungsgerecht ausgelegten Metallbandes im Wesentlichen einer Wandstärke des Strukturteils an einem übrigen Querschnittsbereich entspricht.

Das Konzept lässt sich besonders vorteilhaft realisieren für eine stetig variierte Dicke des gewalzten belastungsgerecht ausgelegten Metallbandes. Es hat sich nämlich gezeigt, dass sich durch eine stetig variierte Dicke das Strukturteil in den besonders starken Belastungen ausgesetzten Bereichen graduell an die Belastung anpassen lässt. Das Konzept der Erfindung erweist sich als besonders vorteilhaft bei einem belastungsangepassten Strukturteil aus Aluminium. In besonders bevorzugter Weise betrifft dies Rohre oder Flachrohre, wie beispielsweise Ein-, Zwei- oder Mehrfachkammer-Rohre für einen Wärmetauscher. In besonders bevorzugter Weise betrifft dies auch ein Strukturteil in Form eines Rohrbodens. Unter einem Rohrboden ist insbesondere ein Strukturteil zu verstehen, welches zur Halterung von Wärmetauscherrohren dient. Ein Rohrboden kann üblicherweise zwischen einem Diffusor und einem aus Rohren gebildeten Wärmetauscherblock angeordnet sein. Dazu hat es sich als vorteilhaft erwiesen, einen Rohrboden beispielsweise an einem Gehäuse eines Wärmetauschers zu befestigen. In dem Gehäuse lässt sich der Wärmetauscherblock mit Wärmetauscherrohren anordnen. ,

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Eine bevorzugte Weiterbildung sieht vor, dass die größte Dicke des Metallbandes an wenigstens einem innenliegenden Bereich des Metallbandes vorliegt und die übrige Dicke des Metallbandes an wenigstens einem neben dem innenliegenden Bereich des Metallbandes liegenden Bereich vorliegt. Ein solches Halbzeug in Form des Metallbandes hat sich als besonders bevorzugt zur Bildung eines Rohres, insbesondere Flachrohres, für einen Wärmetauscher erwiesen. Vorteilhaft ist es dadurch möglich, die Schmalseite eines Flachrohres, d.h. im Bereich des Querschnittsradius, mit der größten Wandstärke auszuführen.

Vorzugsweise kann das Strukturteil an allen Querschnittsradien eine größte Wandstärke aufweisen, welche größer als eine Wandstärke des Strukturteils an einem übrigen Querschnittsbereich ist. Im Falle eines Flachrohres handelt es sich insbesondere um zwei Querschnittsradien. Mit anderen Worten sieht die Weiterbildung für ein Strukturteil in Form eines Flachrohres vor, dass dieses an den Schmalseiten eine größte Wandstärke aufweist, welche gröβer als eine Wandstärke des Flachrohres an einem übrigen Querschnittsbereich ist - ein übriger Querschnittsbereich umfasst regelmäßig die Langseiten des Flachrohres.

Weiter ist vorzugsweise die größte Dicke des Metallbandes nur an innenliegenden Bereichen des Metallbandes vorgesehen. Im Falle eines Flachrohres handelt es sich insbesondere um zwei innenliegende Bereiche. Diese Art der Ausbildung des Halbzeugs in Form des Metallbandes hat sich bewährt, weil damit beispielsweise ein Einkammer- oder Zweikammer-(B-Typ)-Flachrohr gebildet werden kann, welches an beiden Schmalseiten, d.h. im Bereich beider eine Außenkontur beschreibenden Querschnittsradien, eine größten Wandstärke aufweist, welche größer als eine Wandstärke des Flachrohres an einem übrigen Querschnittsbereich ist.

Das Halbzeug in Form des gewalzten belastungsgerecht ausgelegten Metallbandes mit variierender Dicke (so genanntes Rolled Tailored Blank) ist vorteilhaft durch Walzen hergestellt, insbesondere Kaltwalzen. Dazu sind vorzugsweise unprofilierte Walzen vorgesehen. Besonders vorteilhaft zur Herstellung des Halbzeugs in Form des Metallbandes hat sich ein Walzprozess erwiesen, bei dem vorzugsweise unprofilierte Walzen zur Erzeugung unterschiedlicher Metallbanddicken ihren Abstand kontinuierlich ändern. Dadurch lässt sich in besonders bevorzugter Weise ein Halbzeug herstellen, welches in den verdickten Bereichen eine von den übrigen Bereichen ausgehende zunehmende graduelle Belastungsanpassung beim Strukturteil ermöglicht.

Betreffend eine erste bevorzugte Variante eines Strukturteils in Form eines Flachrohres handelt es sich bei dem Querschnittsradius vorzugsweise um einen Biegeradius. Betreffend das Rohr oder Flachrohr ist die Wandstärke, dem Konzept der ersten Variante folgend, in der Querschnittsebene gemessen.

Gemäß einer zweiten Variante ist das Strukturteil bevorzugt in Form eines Rohrbodens gebildet. Insbesondere kann der Querschnittsradius in Form eines Stanzradius gebildet sein. Dem Konzept der zweiten Variante folgend ist die Wandstärke des Rohrbodens senkrecht zur Querschnittsebene gemessen. Eine solche Auslegung des Halbzeugs hat sich als vorteilhaft erwiesen, um einen Rohrboden mit ausgestanzten Öffnungen herzustellen, wobei die Öffnungen zur Aufnahme von Endbereichen von Wärmetauscherrohren vorgesehen sind. Rohrböden sind vor allem in den die Außenkontur der Öffnungen beschreibenden Radien besonders hohen Belastungen ausgesetzt. Im Falle von im Wesentlichen rechteckigen Öffnungen für Flachrohre handelt es sich beispielsweise um vier Querschnittsradien. Selbstverständlich kann auch jede andere polygonale Öffnungsform zur Aufnahme beliebiger Rohrquerschnitte vorgesehen sein.

Grundsätzlich ist es bei der zweiten Variante zu bevorzugen, dass das Halbzeug im Bereich einer mit Radius versehenen Stanzlinie die größte Dicke im Vergleich zu übrigen Bereichen aufweist.

Dem Konzept der Erfindung folgend wird die Aufgabe betreffend das Verfahren durch die Erfindung mittels einem Verfahren der eingangs genannten Art gelöst, bei dem erfindungsgemäß vorgesehen ist, dass als Halbzeug zur Darstellung des Strukturteils ein gewalztes belastungsgerecht ausgelegtes Metallband verwendet wird, bei dem die Dicke des Metallbandes variiert (Rolled Tailored Blank) und das derart zum Strukturteil weiter verarbeitet wird, dass die größte Dicke im Wesentlichen der größten Wandstärke am Querschnittsradius des Strukturteils entspricht. Besonders vorteilhaft ist dazu vorgesehen, dass die Dicke des Metallbandes stetig variiert.

In einer ersten Weiterbildung des Verfahrens kann als Halbzeug ein Metallband verwendet werden, bei dem die Dicke des Metallbandes variiert und welches durch Schneiden aus einem Breitband hergestellt wird. Das Breitband weist dazu eine definierte Abfolge von wiederkehrenden Dickenvariationen auf. Mit anderen Worten, es kann im Rahmen einer solchen ersten Weiterbildung an beispielsweise kaltgewalzten Bändern, beispielsweise aus Aluminium, innerhalb der Stichfolge, d.h. nicht nur in einem Stich, ein definiertes, sich über die Bandbreite wiederholendes Profil mit unterschiedlicher Wanddicke in Längsrichtung erzeugt werden. Ein danach folgendes Schneiden zu schmalen Rohrbändem kann so erfolgen, dass beim anschließenden Rohrformen und Fügen, beispielsweise Schweißen, die dickeren Bereiche in den mehr beanspruchten Bereichen des Rohres liegen.

In einer zweiten Weiterbildung des Verfahrens kann als Halbzeug ein Metallband verwendet werden, bei dem die Dicke des Metallbandes variiert und welches durch Schneiden aus einem Breitband ohne Dickenvariation hergestellt wird, wobei die Schnittstücke anschließend mit der Dickenvariation versehen werden. Mit anderen Worten kann beispielsweise ein Kaltwalzprozess, vor Erreichen einer Solldicke gestoppt werden. Nach dem Schneiden der Bänder auf eine schmale Zwischenbreite können diese ein oder mehrere Walzstiche durchlaufen, indem ein einmaliges analoges Profil eingewalzt wird. Auch bei dieser zweiten Weiterbildung des Verfahrens hat sich die Stichfolge als signifikant erwiesen. Eine letzte Dicke des Kaltwalzens des Bandes, die Breitung durch erneutes Kaltwalzen und ein Erzielen von Profil und Endbreite kann dazu abgestimmt werden. Es erfolgt insbesondere ein erneutes Beschneiden auf die Endbreite.

Im Falle einer bevorzugten Herstellung eines Flachrohres kann in einem weiteren Vertahrensschritt aus dem Halbzeug das Flachrohr durch Biegen hergestellt sein. Im Falle eines Rohrbodens kann dieser aus dem Halbzeug durch Stanzen hergestellt sein. So können beispielsweise mit dem vorgenannten erfindungsgemäßen Verfahren oder einer der genannten Weiterbildungen durch Kaltwalzen eingebrachte Profile so gestanzt werden, dass die dickeren Bereiche nach dem Stanzen in den höher belasteten Bereichen der Stanzteile liegen. Um beispielsweise eine für Öffnungen umlaufende Verdickung vorzusehen, kann es sich auch als vorteilhaft erweisen, einen Walzschritt mit in Längs- und Querrichtung entsprechend profilierten Walzen vorzusehen.

In einer dritten Weiterbildung des Verfahrens kann - insbesondere betreffend einen Rohrboden - als Halbzeug ein Metallband verwendet werden, bei dem die Dicke des Metallbandes variiert und welches durch Stanzen aus einem Breitband ohne Dickenvariation hergestellt wird. Dabei kann eine geringste Stanzausnehmung im Bereich der größten Wandstärke im Querschnittsradius des Strukturteils erfolgen. Vorteilhaft wird dadurch ein besonders belasteter Bereich eines Querschnittsradius, beispielsweise eine Öffnung in einem Rohrboden, belastungsangepasst verstärkt. Aus dem Halbzeug in Form des erfindungsgemäßen gewalzten belastungsgerecht ausgelegten Metallbandes kann somit durch Stanzen ein vorteilhaftes Strukturteil für einen Wärmetauscher hergestellt sein.

Ein solches Strukturteil kann insbesondere vorteilhaft auch geschweißt sein; dies aufgrund der Möglichkeit gemäß dem Konzept der Erfindung Schweißbereiche belastungsangepasst auszulegen.

Das Konzept der Erfindung führt auch auf einen Wärmetauscher der eingangs genannten Art, bei dem erfindungsgemäß ein belastungsangepasstes Strukturteil aus Metall gemäß dem Konzept der Erfindung oder einer der Weiterbildungen vorgesehen ist. Ebenfalls kann bei dem Wärmetauscher ein belastungsangepasstes Strukturteil aus Metall vorgesehen sein, das nach einem Verfahren gemäß dem Konzept der Erfindung oder einer der Weiterbildungen hergestellt ist.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1: gemäß dem Stand der Technik in Ansicht (A) ein Halbzeug in Form eines Metallbandes mit gleichmäßiger Wandstärke, in An- sicht (B) ein daraus hergestelltes Strukturteil und in Ansicht (C) einen Ausschnitt davon;
- Fig. 2: gemäß dem Stand der Technik in Ansicht (A) ein Zweikammer- Flachrohr und in Ansicht (B) ein Halbzeug mit gleichmäßiger Wandstärke;
- Fig. 3: eine bevorzugte Ausführungsform in Ansicht (A) eines Halbzeugs in Form eines gewalzten belastungsgerecht ausgelegten Metall- bandes mit variierender Dicke (Rolled Tailored Blank) zur Hers- tellung eines Strukturteils in Ansicht (B) gemäß dem Konzept der Erfindung und in Ansicht (C) einen Ausschnitt aus dem eine Au- ßenkontur beschreibenden Querschnittsradius mit belastungs- angepasster Verstärkung der Wandstärke;
- Fig. 4: eine besonders bevorzugte Ausführungsform in Ansicht (A) eines belastungsangepassten Zweikammer-Flachrohres mit in den Querschnittsradien verstärkter Wandstärke gemäß dem Konzept der Erfindung und in Ansicht (B) ein entsprechend bevorzugtes Halbzeug in Form eines gewalzten belastungsgerecht ausgeleg- ten Metallbandes mit variierender Dicke (Rolled Tailored Blank).

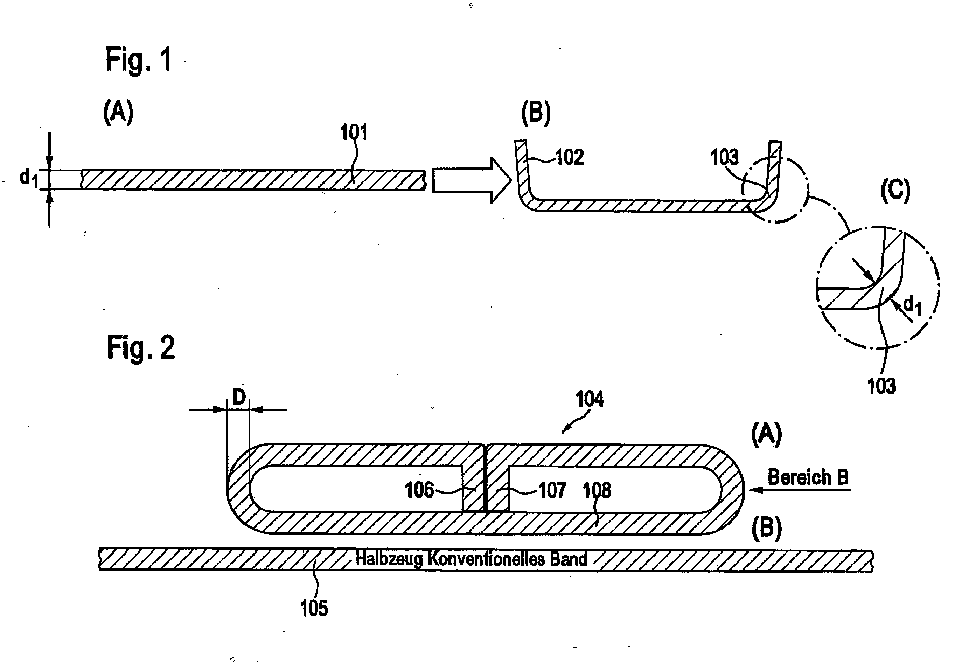

Fig. 1 zeigt ein gemäß dem Stand der Technik üblicherweise verwendetes Metallband 101 mit durchgängig gleichbleibender Dicke d₁ zur Herstellung eines Strukturteils 102 für einen Wärmetauscher. Das Strukturteil 102 wird durch eine Biegeumforung in Form eines U-förmigen Profils gebildet, welches an einem Querschnittsradius 103 - der in Ansicht C als Ausschnittvergrößerung gezeigt ist - im Wesentlichen die gleichbleibende Dicke d₁ des Metallbandes 101 aufweist.

Fig. 2 zeigt ein - üblicherweise als B-Rohr bezeichnetes - Zweikammer-Flachrohr 104, das ebenfalls aus einem in Ansicht B gezeigten Metallband 105 mit gleichbleibender Dicke D gebildet ist. Im Bereich B der Schmalseiten des Zweikammer-Flachrohres 104 entspricht die Wandstärke im Wesentlichen der Dicke D des Metallbandes 105. Das Mehrkammer-Flachrohr 104 wirdt üblicherweise durch einen Biegeprozess hergestellt, bei dem die Randbereiche 106, 107 des Metallbandes 105 zur Bildung eines innenliegenden Doppelsteges rechtwinklig umgebogen werden und, bei Bedarf, an der gegenüberliegenden Langseite 108 des Mehrkammer-Flachrohres 104 innen festgemacht werden. Der Biegeradius im Bereich B des Mehrkammer-Flachrohres hat sich als besonders belastungsanfällig erwiesen - sei es durch dynamische oder statische Belastungen im Betrieb eines Wärmetauschers.

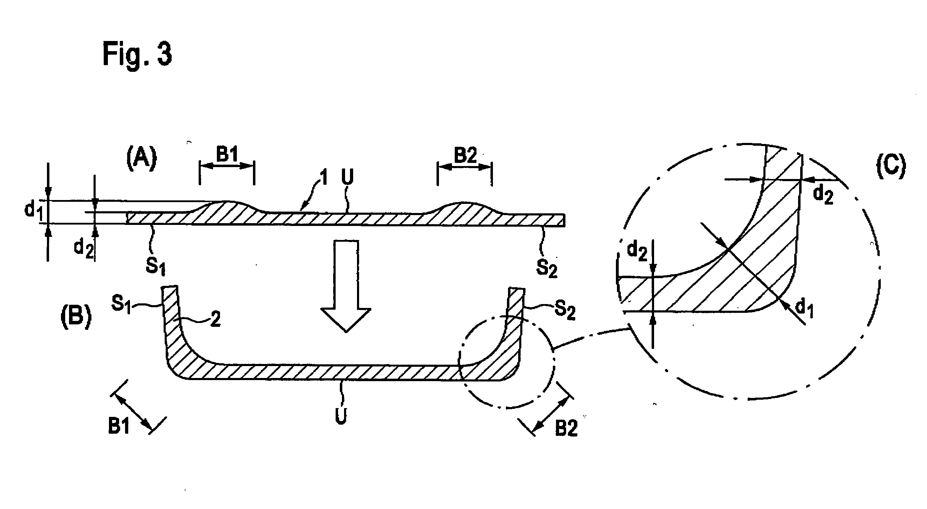

Fig. 3 zeigt eine gegenüber Fig. 1 gemäß dem Konzept der Erfindung verbesserte Ausführungsform eines Strukturteils 2 aus einem gewalzten belastungsgerecht ausgelegten Metallband 1, welches bereits eine variierende Dicke aufweist (Rolled Taylored Blanks). Das gewalzte belastungsgerecht ausgelegte Metallband 1 weist an zwei innenliegenden Bereichen B1, B2 eine größte Dicke d₁ auf, welche größer ist als die übrige Dicke d₂ des Metallbandes 1 in den vorliegend drei neben den innenliegenden Bereichen B1, B2 des Metallbandes 1 liegenden Bereichen - nämlich einem Mittenbereich U und zwei Randbereichen S₁, S₂. Im Rahmen eines Biegevorgangs entsteht das in Ansicht B gezeigte Strukturteil 2 in Form eines U-förmigen Profils, Die größte Dicke d₁ des Metallbandes 1 entspricht im Wesentlichen der größten Wandstärke d₁ am in Ansicht C vergrößert dargestellten Querschnittsradius des Strukturteils 2. Bei dem Strukturteil 2 entspricht die Wandstärke im Bereich der Schenkel S₁, S₂ und an der Basis U im Wesentlichen der übrigen Dicke d₂ des gewalzten belastungsgerecht ausgelegten Metallbandes 1. Zur Darstellung des Strukturteils wird also ein so genanntes "Rolled Tailored Blank" 1 wie es in Ansicht A der Fig. 3 gezeigt ist, als Halbzeug derart weiterverarbeitet, dass die größte Dicke d₁ im Wesentlichen der größten Wandstärke d₁ am Querschnittsradius des Strukturteils 2 entspricht. Dies führt dazu, dass das Strukturteil 2 - vorliegend durch die stetig variierte Dicke des Metallbandes 1 - in den besonders starken Belastungen ausgesetzten Querschnittsradien B1, B2 eine graduelle Anpassung im Hinblick auf die Belastungen erfährt.

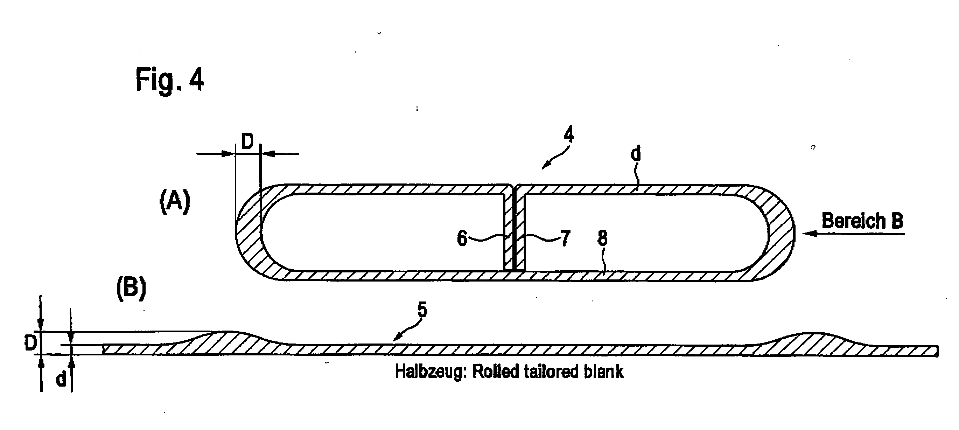

Fig. 4 zeigt in Ansicht B ein qualitativ ähnlich ausgelegtes Halbzeug in Form eines gewalzten belastungsgerecht ausgelegten Metallbandes 5 mit stetig variierter Dicke (Rolled Tailored Blank) dies zur Herstellung eines gegenüber Fig. 2 verbesserten Zweikammer-Flachrohres gemäß dem Konzept der Erfindung. Das Zweikammer-Flachrohr 4 ist wiederum mit zwei Kammern durch einen Biegevorgang gebildet, bei dem Randbereiche 6, 7 des Metallbandes 5 rechtwinklig umgebogen werden und an der Innenseite der gegenüberliegenden Langseite 8 innen angefügt oder anderweitig festgemacht werden. Vorteilhaft kann somit der größte Teil des Zweikammer-Flachrohres 4 mit einer vergleichsweise geringen Wandstärke d ausgelegt werden, wohingegen im Bereich B der Schmalseiten - d.h. an den zwei Außenkonturen beschreibenden Querschnittsradien - eine größte Wandstärke D vorgesehen ist, welche im Wesentlichen der größten Dicke D des "Rolled Tailored Blanks" entspricht. Es hat sich gezeigt, dass bei einer Auslegung eines Zweikammer-Flachrohres oder anderen Flachrohren, beispielsweise Einkammer-Flachrohren oder anderen Mehrkammer-Flachrohren, partielle Wanddickenreduzierungen von einer Wanddicke D bis zu einer Wanddicke d im Größenbereich von 0,5 mm realisiert werden können. Dies führt nicht nur zu einer Gewichtsersparnis, sondern darüber hinaus auch zu einer Verbesserung des Wärmetauschgrades. Dennoch ist in den besonders beanspruchten Bereichen der Querschnittsradien, d.h. an den Schmalseiten B des Flachrohres 4, die Wandstärke entsprechend vergrößert, um belastungsgerecht ausgebildet zu sein. Wiederum ist vorliegend aufgrund der stetigen Dickevariation am Metallband 5 eine graduelle Wanddickenanpassung beim Mehrkammer-Flachrohr 4 erreicht.

Zusammenfassend betrifft die Erfindung ein belastungsangepasstes Strukturteil 2 aus Metall, insbesondere Aluminium, für einen Wärmetauscher, das an einem quer zu einer Längsachse liegenden Querschnitt wenigstens einen, eine Außenkontur beschreibenden Querschnittsradius aufweist, wobei das Strukturteil 2 am Querschnittsradius eine größte Wandstärke aufweist, welche größer als eine Wandstärke des Strukturteils 2 an einem übrigen Querschnittsbereich ist, und wobei das Strukturteil 2 aus einem Halbzeug in Form eines gewalzten belastungsgerecht ausgelegten Metallbandes 1, 5 mit, insbesondere stetig, variierender Dicke (Rolled Tailored Blank) hergestellt ist, dessen größte Dicke im Wesentlichen der größten Wandstärke am Querschnittsradius des Strukturteils 2 entspricht und das eine übrige Dicke aufweist, welche im Wesentlichen einer Wandstärke des Strukturteils 2 an einem übrigen Querschnittsbereich entspricht.

### Bezugszeichenliste

- 1: Metallband (Rolled tailored blank)
- 2: Strukturteil
- 4: Zweikammer-Flachrohr
- 5: Metallband
- 6: Randbereich
- 7: Randbereich
- 8: Langseite

- 101: Metallband
- 102: Strukturteil
- 103: Querschnittsradius
- 104: Zweikammer-Flachrohr
- 105: Metallband
- 106: Randbereich
- 107: Randbereich
- 108: Langseite

- D: Dicke
- d: Wanddicke
- d₁: Dicke
- d₂: Dicke

- B: Bereich
- B1: Bereich
- B2: Bereich
- D: Dicke, Wanddicke
- S₁: Randbereich
- S₂: Randbereich
- U: Mittenbereich

## Patentansprüche

1. Belastungsangepasstes Strukturteil (2) aus Metall, insbesondere Aluminium, für einen Wärmetauscher, das
- an einem quer zu einer Längsachse liegenden Querschnitt wenigstens einen, eine Außenkontur beschreibenden Querschnittsradius aufweist, wobei das Strukturteil (2) am Querschnittsradius eine größte Wandstärke (d₁, D) aufweist, welche größer als eine Wandstärke (d₂, d) des Strukturteils (2) an einem übrigen Querschnittsbereich ist, und wobei
- das Strukturteil (2) aus einem Halbzeug in Form eines gewalzten belastungsgerecht ausgelegten Metallbandes (1, 5) mit, insbesondere stetig, variierender Dicke (d₁, d₂, d, D) (Rolled Tailored Blank) hergestellt ist, dessen größte Dicke (d₁, D) im Wesentlichen der größten Wandstärke (d₁, D) am Querschnittsradius des Strukturteils (2) entspricht und das eine übrige Dicke (d, d₂) aufweist, welche im Wesentlichen einer Wandstärke (d, d₂) des Strukturteils (2) an einem übrigen Querschnittsbereich entspricht.

2. Strukturteil (2) nach Anspruch 1, **dadurch gekennzeichnet, dass** die größte Dicke (d₁, D) des Metallbandes (1, 5) an wenigstens einem innenliegenden Bereich des Metallbandes (1, 5) vorliegt und die übrige Dicke (d₂, d) des Metallbandes (1, 5) an wenigstens einem neben dem innenliegenden Bereich des Metallbandes (1,5) liegenden Bereich vorliegt.

3. Strukturteil (2) nach Anspruch 1 oder 2, **dadurch gekennzeichnet, dass** das Strukturteil (2) an allen, insbesondere zwei oder vier, Querschnittsradien eine größte Wandstärke (d₁, D) aufweist, welche größer als eine Wandstärke (d₂, d) des Strukturteils (2) an einem übrigen Querschnittsbereich ist.

4. Strukturteil (2) nach einem der Ansprüche 1 bis 3, **dadurch gekennzeichnet, dass** die größte Dicke (d₁, D) des Metallbandes (1, 5) nur an, wenigstens an zwei, innenliegenden Bereichen des Metallbandes (1, 5) vorliegt.

5. Strukturteil (2) nach einem der Ansprüche 1 bis 4, **dadurch gekennzeichnet, dass** das Metallband (1, 5) durch Walzen, insbesondere Kaltwalzen, hergestellt ist, vorzugsweise mit unprofilierten Walzen.

6. Strukturteil (2) nach einem der Ansprüche 1 bis 5, **dadurch gekennzeichnet, dass** das Metallband (1, 5) durch Walzen hergestellt ist, wobei, vorzugsweise unprofilierte, Walzen zur Erzeugung unterschiedlicher Metallbanddicken ihren Abstand kontinuierlich ändern.

7. Strukturteil (2) nach einem der Ansprüche 1 bis 6, **dadurch gekennzeichnet, dass** das Strukturteil (2) ein Flachrohr (4) ist, insbesondere mit einem Radius in Form eines Biegeradius.

8. Strukturteil (2) nach einem der Ansprüche 1 bis 7, **dadurch gekennzeichnet, dass** das Strukturteil (2) am Querschnittsradius eine größte Wandstärke (d₁, D) aufweist, welche größer als eine Wandstärke (d₂, d) des Strukturteils (2) an einem übrigen Querschnittsbereich ist, und die Wandstärke in der Querschnittsebene gemessen ist.

9. Strukturteil (2) nach einem der Ansprüche 1 bis 8, **dadurch gekennzeichnet, dass** das Strukturteil (2) ein Rohrboden ist, insbesondere mit einem Radius in Form eines Stanzradius.

10. Strukturteil (2) nach einem der Ansprüche 1 bis 9, **dadurch gekennzeichnet, dass** das Strukturteil (2) am Querschnittsradius eine größte Wandstärke aufweist, welche größer als eine Wandstärke des Strukturteils (2) an einem übrigen Querschnittsbereich ist, und die Wandstärke senkrecht zur Querschnittsebene gemessen ist.

11. Verfahren zur Herstellung eines belastungsangepassten Strukturteils (2) nach einem der Ansprüche 1 bis 10, **dadurch gekennzeichnet, dass** als Halbzeug zur Darstellung des Strukturteils (2) ein gewalztes belastungsgerecht ausgelegtes Metallband (1, 5) verwendet wird, bei dem die Dicke des Metallbandes (1, 5), insbesondere stetig, variiert (Rolled Tailored Blank) und das derart zum Strukturteil (2) weiterverarbeitet wird, dass die größte Dicke (D, d₁) im Wesentlichen der größten Wandstärke (D, d₁) am Querschnittsradius des Strukturteils (2) entspricht.

12. Verfahren nach Anspruch 11, **dadurch gekennzeichnet, dass** als Halbzeug ein Metallband (1, 5) verwendet wird, bei dem die Dicke des Metallbandes (1, 5), insbesondere stetig, variiert und welches durch Schneiden aus einem Breitband hergestellt wird, welches Breitband eine definierte Abfolge von wiederkehrenden, insbesondere stetigen, Dickevariationen aufweist.

13. Verfahren nach Anspruch 11 oder 12, **dadurch gekennzeichnet, dass** als Halbzeug ein Metallband (1, 5) verwendet wird, bei dem die Dicke des Metallbandes (1,5), insbesondere stetig, variiert und welches durch Schneiden aus einem Breitband ohne Dickenvariation hergestellt wird, welche Schnittstücke mit der, insbesondere stetigen, Dickevariation versehen wird.

14. Verfahren nach einem der Ansprüche 11 bis 13, **dadurch gekennzeichnet, dass** als Halbzeug ein Metallband (1, 5) verwendet wird, bei dem die Dicke des Metallbandes (1, 5), insbesondere stetig, variiert und welches durch Stanzen aus einem Breitband ohne Dickenvariation hergestellt wird, wobei eine geringste Stanzausnehmung im Bereich der größten Wandstärke im Querschnittsradius des Strukturteils (2) erfolgt.

15. Verfahren nach einem der Ansprüche 11 bis 14, **dadurch gekennzeichnet, dass** das Strukturteil (2), insbesondere eine Flachrohr (4), aus dem Halbzeug durch Biegen hergestellt ist oder das Strukturteil (2), insbesondere ein Rohrboden, aus dem Halbzeug durch Stanzen hergestellt ist, vorzugsweise zur Darstellung des Strukturteils (2) gefügt, insbesondere geschweißt, gelötet od.dgl. wird.
